# EUROPEAN PATENT SPECIFICATION

(11) **EP 1 678 256 B1**
(45) Date of publication and mention of the grant of the patent: **03.09.2008**
(21) Application number: 04794371.7
(22) Date of filing: 07.10.2004
(51) Int. Cl.: C08L 71/12, C08K 5/00, C08K 5/523

(54) **POLY(ARYLENE ETHER) COMPOSITION AND METHOD OF MAKING**
POLY(ARYLENETHER)ZUSAMMENSETZUNG UND HERSTELLUNGSVERFAHREN DAFÜR
COMPOSITION DE POLY(ARYLENE ETHER) ET PROCEDE DE FABRICATION

(30) Priority: 10.10.2003 US 684113
(43) Date of publication of application: 12.07.2006
(73) Proprietor: GENERAL ELECTRIC COMPANY, Schenectady, NY 12345 (US)
(72) Inventor: MHETAR, Vijay, R., Slingerlands, NY 12159 (US)
(74) Representative: Bublak, Wolfgang
(86) International application number: PCT/US2004/032998
(87) International publication number: WO 2005/037922

(56) References cited:
- EP-A- 0 462 410
- EP-A- 0 557 654
- EP-A- 0 578 291
- EP-A- 0 592 144
- WO-A-01/53413
- US-A1- 2001 053 820
- US-A1- 2003 096 123
- US-B2- 6 352 782

## Description

### BACKGROUND OF INVENTION

The disclosure relates to poly(arylene ether) compositions. In particular, the disclosure relates to thermoplastic poly(arylene ether) compositions with increased thermo-oxidative stability.
Poly(arylene ether) is a well known and widely used class of polymer characterized by a unique combination of chemical, physical and electrical properties over a broad temperature range. Many polymers, including poly(arylene ether) can exhibit a decrease in some properties over time in some environments and there is an increasing desire for extending useful polymer lifetime.

US 2003/0096123 describes a thermosetting composition comprises a capped poly(arylene ether), an alkenyl aromatic monomer, and an alkoxylated acryloyl monomer. The composition provides good flow properties and fast curing rates. After curing, the composition exhibits good stiffness, toughness, and heat resistance.

US 2001/0053820 relates to a thermosetting composition comprises a capped poly(arylene ether), an alkenyl aromatic monomer, and an acryloyl monomer.

WO 01/53413 describes a curable resin composition includes an unsaturated polyester, an alkenyl aromatic compound, and d capped poly(arylene ether). The composition is suitable for low temperature curing and exhibits reduced curing shrinkage and reduced brittleness.

US 6,352,782 discloses a capped poly(phenylene ether) resin composition which is formed from (1) a poly(phenylene ether) compound (PPE) and (2) a curable unsaturated monomer composition.

EP 0 462 420 relates to substituted alkoxy- or alkylthiochlorotriazines wherein the substituents on the alkoxy group are chlorine, bromine or diakylphosphato are useful as capping agents for polyphenylene ethers.

EP 0 592 144 discloses moldable products obtained from extruded blends of diene based copolymers and pelletized salicylic acid ester capped polyphenylene ether have been found to exhibit improved resistance to loss in impact after being thermally recycled.

Polymer compositions containing a polyphenylene ether-polyolefin copolymer is disclosed in EP 0 578 291, said composition is obtained by melt mixing an ethylene(alkyl)acrylic acid copolymer with a polyphenylene ether or an ester endcapped polyphenylene ether.

EP 0 557 654 relates to a readily molded engineering plastic composition comprising:
Polyphenylene ether polymer; optionally
A second polymer chosen from polyesters, polyamides and polycarbonates; and
About 0.05 to about 5 weight percent hydrogenated poly (alpha-olefin) fluid.

### BRIEF DESCRIPTION OF THE INVENTION

The previously mentioned need is met by a thermoplastic poly(arylene ether) composition comprising greater than 15 weight % of a poly(arylene ether) having aromatic ester end groups selected from the group consisting of salicylic acid and athranilic acid, and a component selected from the group consisting of impact modifier, alkenyl aromatic polymer, rubber-modified poly(alkenyl aromatic) resin, reinforcing filler, flame retardant and combinations of two or more of the foregoing, with the proviso that when the component is a rubber-modified poly(alkenyl aromatic) resin, the composition further comprises a antioxidant. In another embodiment, a method of making a thermoplastic poly(arylene ether) composition comprises blending a mixture comprising poly(arylene ether) having aromatic ester end groups and a component selected from the group consisting of impact modifier, alkenyl aromatic polymer, rubber-modified poly(alkenyl aromatic) resin, reinforcing filler, flame retardant and combinations of two or more of the foregoing.
In another embodiment, a method of making a thermoplastic poly(arylene ether composition comprises melt blending a poly(arylene ether) with one or more capping agents selected from the group consisting of salicylic acid ester, anthranilic acid ester and derivatives thereof and a component selected from the group consisting of impact modifier, alkenyl aromatic polymer, rubber-modified poly(alkenyl aromatic) resin, reinforcing filler, flame retardant and combinations of two or more of the foregoing.

### DETAILED DESCRIPTION

The invention relates to a poly(arylene ether) composition having excellent thermo-oxidative stability as described in claim 1. The poly(arylene ether) composition has improved thermo-oxidative stability compared to poly(arylene ether) compositions comprising poly(arylene ether) having hydroxyl end groups and thus has a longer useful lifetime at elevated temperatures. Without being bound by theory, it is believed that the thermo-oxidative stability of poly(arylene ether) is related to the identity of the polymer end groups. Poly(arylene ether) chains terminating in hydroxyl groups are sufficiently reactive to oxidize when exposed to temperatures in excess of about 100°C for extended periods of time (about 60,000 hours). Thus poly(arylene ether) having hydroxyl end groups has a 100°C relative thermal index (RTI) (as rated by Underwriter Laboratories) despite a glass transition temperature (Tg) of 215°C. Additionally, lower molecular weight poly(arylene ether) has poorer thermo-oxidative stability than higher molecular weight poly(arylene ether) due to the presence of more hydroxyl end groups. In contrast poly(arylene ether) capped with a less reactive moiety such as an aromatic ester has better thermo-oxidative stability than hydroxyl terminated poly(arylene ether) because the end groups are less reactive and more resistant to oxidation.

The term poly(arylene ether) includes polyphenylene ether (PPE) and poly(arylene ether) copolymers; graft copolymers; poly(arylene ether) ether ionomers; and block copolymers of alkenyl aromatic compounds, vinyl aromatic compounds, and poly(arylene ether), and the like; and combinations comprising at least one of the foregoing; and the like. Poly(arylene ether)s per se, are known polymers comprising a plurality of structural units of the formula (I): 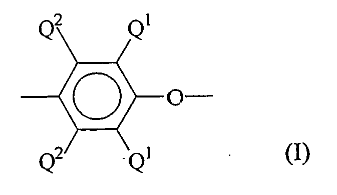 wherein for each structural unit, each Q¹ is independently hydrogen, halogen, primary or secondary lower alkyl (e.g., alkyl containing up to 7 carbon atoms), phenyl, haloalkyl, aminoalkyl, hydrocarbonoxy, halohydrocarbonoxy wherein at least two carbon atoms separate the halogen and oxygen atoms, or the like; and each Q² is independently hydrogen, halogen, primary or secondary lower alkyl, phenyl, haloalkyl, hydrocarbonoxy, halohydrocarbonoxy wherein at least two carbon atoms separate the halogen and oxygen atoms, or the like. Preferably, each Q¹ is alkyl or phenyl, especially C₁₋₄ alkyl, and each Q² is hydrogen.

Both homopolymer and copolymer poly(arylene ether) are included. The preferred homopolymers are those containing 2,6-dimethylphenylene ether units. Suitable copolymers include random copolymers containing, for example, such units in combination with 2,3,6-trimethyl-1,4-phenylene ether units or copolymers derived from copolymerization of 2,6-dimethylphenol with 2,3,6-trimethylphenol. Also included are poly(arylene ether) containing moieties prepared by grafting vinyl monomers or polymers such as polystyrenes, as well as coupled poly(arylene ether) in which coupling agents such as low molecular weight polycarbonates, quinones, heterocycles and formals undergo reaction in known manner with the hydroxy groups of two poly(arylene ether) chains to produce a higher molecular weight polymer. Poly(arylene ether)s further include combinations comprising at least one of the above.

The poly(arylene ether) are typically prepared by the oxidative coupling of at least one monohydroxyaromatic compound such as 2,6-xylenol or 2,3,6-trimethylphenol. Catalyst systems are generally employed for such coupling and they typically contain at least one heavy metal compound such as a copper, manganese or cobalt compound, usually in combination with various other materials.

In one embodiment, the monohydroxyaromatic compound is 2,6-dimethylphenol having a purity of greater than about 99 weight percent, preferably greater than about 99.67 weight percent, and more preferably greater than about 99.83 weight percent. Additionally, the 2,6-dimethylphenol preferably comprises less than about 0.004 weight percent phenol and more preferably less than about 0.003 weight percent phenol. It is preferred that the 2,6-dimethylphenol comprises less than about 0.12 weight percent cresol and preferably less than about 0.087 weight percent cresol. Cresol includes, for example, o-cresol, m-cresol, p-cresol, and combinations comprising at least one of the foregoing cresols. The 2,6-dimethylphenol may comprise less than about 0.107 weight percent other mono, di and/or trialkylphenols and preferably less than about 0.084 weight percent. Other mono, di and/or trialkylphenols may include, for example, 2,3,6-trimethylphenol, 2,6-ethylmethylphenol, 2-ethylphenol, 2,4,6-trimethylphenol, and combinations comprising at least one of the foregoing other mono-, di- and/or trialkylphenols. Finally, the 2,6-dimethylphenol preferably comprises less than about 0.072 weight percent of another dimethylphenol besides 2,6-dimethylphenol, more preferably less than about 0.055 weight percent of another dimethylphenol. The other dimethylphenol may be 2,4-dimethylphenol, 2,3-dimethylphenol, 2,5-dimethylphenol, 3,5-dimethylphenol, 3,4-dimethylphenol, or a combination comprising at least one of the foregoing dimethylphenols. It is believe that minimizing the amounts of phenol, cresol, other dimethylphenols, and mono-, di-, and/or trialkylphenols in the 2,6-dimethylphenol monomer will help to reduce undesired branching or chain stopping reactions and to maintain the integrity of the resulting poly(arylene ether) physical properties.

The poly(arylene ether) may be capped in solution or in melt. Solution capping methods are described in U.S. Patent Nos. 3,375,228 and 4,048,143 and generally involved dissolving the poly(arylene ether) in a solvent, reacting the dissolved poly(arylene ether) with a capping agent to form a capped poly(arylene ether) and removing the solvent. Solution methods can result in the production of additional hydroxyl end groups however due to polymer backbone rearrangement.

Melt capping methods are described in U.S. Patent No. 4,760,118. The poly(arylene ether) is reacted in melt with an aromatic ester or combination of aromatic esters. The reaction results in the conversion of the poly(arylene ether) terminal hydroxyl groups to aromatic ester. Aromatic ester is herein defined as including substituted and unsubstituted aromatic esters, wherein the substituents on the substituted aromatic esters do not affect the capping reaction and are thermo-oxidatively stable. Preferred capping agents include salicylic acid, anthranilic acid, and derivatives thereof such as esters in monomeric or polymeric form. As used herein, the term "ester of salicylic acid" include compounds in which the carboxy group, the hydroxy group or both have been esterified.

For the most part, it is desirable for all hydoxyl end groups on the poly(arylene ether) to be capped. However, it is possible to employ poly(arylene ether) in which a portion of the hydroxyl end groups remain uncapped. The amount of uncapped hydroxyl end groups is less than or equal to about 20 mol%, preferably less than or equal to about 10 mol% and more preferably less than or equal to about 2 mol%, based on the total number of moles of endgroups.

The poly(arylene ether) generally has a number average molecular weight of about 2,500-40,000 atomic mass units (amu) and a weight average molecular weight of about 20,000-80,000 amu, as determined by gel permeation chromatography. The poly(arylene ether) may have an intrinsic viscosity of about 0.10 to about 0.60 deciliters per gram (dl/g), preferably about 0.29 to about 0.48 dl/g, as measured in chloroform at 25°C. It is also possible to utilize a high intrinsic viscosity poly(arylene ether) and a low intrinsic viscosity poly(arylene ether) in combination. Determining an exact ratio, when two intrinsic viscosities are used, will depend somewhat on the exact intrinsic viscosities of the poly(arylene ether) used and the ultimate physical properties that are desired.

The composition may comprise poly(arylene ether) in an amount of about 5 to about 95 weight percent. Within this range, the composition may comprise greater than or equal to about 10 and preferably greater than or equal to about 15 weight percent poly(arylene ether). Also within this range the composition may comprise less than or equal to about 90 and preferably less than or equal to about 85, and most preferably less than or equal to about 80 weight percent poly(arylene ether), based on the total weight of the composition.

Impact modifiers include block copolymers, for example, A-B diblock copolymers and A-B-A triblock copolymers having of one or two alkenyl aromatic blocks A, which are typically styrene blocks, and a rubber block, B, which is typically an isoprene or butadiene block. The butadiene block preferably is partially hydrogenated. Mixtures of these diblock and triblock copolymers may be especially useful.

Suitable A-B and A-B-A copolymers include but are not limited to polystyrene-polybutadiene, polystyrene-poly(ethylene-propylene), polystyrene-polyisoprene, poly(α-methylstyrene)-polybutadiene, polystyrene-polybutadiene-polystyrene (SBS), polystyrene-poly(ethylene-propylene)-polystyrene (SEBS), polystyrene-polyisoprene-polystyrene and poly(alpha-methylstyrene)-polybutadiene-poly(alpha-methylstyrene), as well as the selectively hydrogenated versions thereof, and the like. Mixtures of the aforementioned block copolymers are also useful. Such A-B and A-B-A block copolymers are available commercially from a number of sources, including Phillips Petroleum under the trademark SOLPRENE, Shell Chemical Co., under the trademark KRATON, Dexco under the trademark VECTOR, and Kuraray under the trademark SEPTON.

When using fully unsaturated copolymers such as SBS it is preferable to employ a sufficient amount of an anti-oxidant to prevent substantial amounts of oxidation of the unsaturated bonds. Alternatively, partially or fully hydrogenated impact modifiers may be used such as SEBS. Copolymers of ethylene and C₃-C₁₀ monoolefins and non-conjugated dienes, herein referred to as EPDM copolymers, are also suitable. Examples of suitable C₃-C₁₀ monoolefins for EPDM copolymers include propylene, 1-butene, 2-butene, 1-pentene, 2-pentene, 1-hexene, 2-hexene and 3-hexene. Suitable dienes include 1,4 hexadiene and monocylic and polycyclic dienes. Mole ratios of ethylene to other C₃-C₁₀ monoolefin monomers can range from 95:5 to 5:95 with diene units being present in the amount of from 0.1 to 10 mol%. EPDM copolymers can be functionalized with an acyl group or electrophilic group for grafting onto the poly(arylene ether) as disclosed in U.S. Patent No. 5,258,455.

A useful amount of impact modifier is up to about 20 weight percent (wt%), with about 4 wt% to about 15 wt% preferred, and about 8 wt% to about 12 wt% especially preferred, wherein the weight percentages are based on the entire weight of the composition.

Alkenyl aromatic polymers as used herein are homopolymers of an alkenyl aromatic monomer, wherein the alkenyl aromatic monomer has the formula 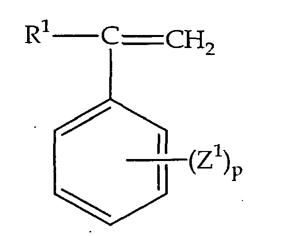 wherein R¹ is hydrogen, lower alkyl or halogen; Z¹ is vinyl, halogen or lower alkyl; and p is from 0 to 5. Preferred alkenyl aromatic monomers include styrene, chlorostyrene, and vinyltoluene. A particularly preferred homopolymer of an alkenyl aromatic monomer is the homopolymer derived from styrene (i.e., homopolystyrene). The homopolystyrene preferably comprises at least 99% of its weight, more preferably 100% of its weight, from styrene.

Highly preferred homopolystyrenes include atactic and syndiotactic homopolystyrenes. Suitable atactic homopolystyrenes are commercially available as, for example, EB3300 from Chevron, and P1800 from BASF. Suitable syndiotactic homopolystyrenes are commercially available from Dow Chemical Company and Idemitsu Kosan Company, Ltd.

The composition may comprise the alkenyl aromatic polymer in an amount of about 1 to about 80 weight percent, preferably about 20 to about 70 weight percent, based on the total weight of the composition.

A rubber-modified poly(alkenyl aromatic) resin comprises a polymer derived from at least one of the alkenyl aromatic monomers described above, and further comprises a rubber modifier in the form of a blend and/or a graft. The rubber modifier may be a polymerization product of at least one C₄-C₁₀ non aromatic dyne monomer, such as butadiene or isoprene. The rubber-modified poly(alkenyl aromatic) resin comprises about 98 to about 70 weight percent of the poly(alkenyl aromatic) resin and about 2 to about 30 weight percent of the rubber modifier, preferably about 88 to about 94 weight percent of the poly(alkenyl aromatic) resin and about 6 to about 12 weight percent of the rubber modifier.

Highly preferred rubber-modified poly(alkenyl aromatic) resins include the styrene-butadiene copolymers containing about 88 to about 94 weight percent styrene and about 6 to about 12 weight percent butadiene. These styrene-butadiene copolymers, also known as high-impact polystyrenes, are commercially available as, for example, GEH 1897 from General Electric Company, and BA 5350 from Chevron Chemical Company.

The composition may comprise the rubber-modified poly(alkenyl aromatic) resin in an amount of about 1 to about 80 weight percent, preferably about 20 to about 70 weight percent, based on the total weight of the composition. When employing a rubber-modified poly(alkenyl aromatic) resin a sufficient amount of anti-oxidant should also be employed to prevent oxidation of the rubber modifier.

Glass fibers can be formed from any type of fiberizable glass composition known to those skilled in the art, and include those prepared from fiberizable glass compositions commonly known as "E-glass," "A-glass," "C-glass," "D-glass," "R-glass," "S-glass," as well as E-glass derivatives that are fluorine-free and/or boron-free. Such compositions and methods of making glass filaments therefrom are well known to those skilled in the art and a more detailed description is not necessary.

Commercially produced glass fibers generally have nominal filament diameters of about 4.0 to about 35.0 micrometers, and most commonly produced E-glass fibers have a nominal filament diameter of about 9.0 to about 30.0 micrometers. The glass fibers may be sized or unsized. Sized glass fibers are conventionally coated on at least a portion of their surfaces with a sizing composition selected for compatibility with the polymeric thermoplastic matrix material. The sizing composition facilitates wetout and wet-through of the matrix material upon the fiber strands and assists attaining desired physical properties in the composite. There is no particular limitation on the length of the fibers although preferred fibers are less about 6 millimeters (mm) in length.

The composition may comprise glass fibers in an amount of about 1 to about 60 weight percent. Within this range, the composition may comprise greater than or equal to about 5 and preferably greater than or equal to about 10 weight percent glass fiber. Also within this range the composition may comprise less than or equal to about 50 and preferably less than or equal to about 40, and most preferably less than or equal to about 30 weight percent glass fiber, based on the total weight of the composition.

Flame retardants include organic phosphates; zinc borate in combination with magnesium hydroxide; boron phosphate in combination with amine functionalized silicone fluids, and low melting point glasses having melting points of about 300°C to about 650°C. The organic phosphate is preferably an aromatic phosphate compound of the formula 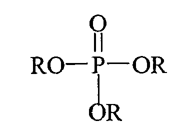 where R is the same or different and is alkyl, cycloalkyl, aryl, alkyl substituted aryl, halogen substituted aryl, aryl substituted alkyl, halogen, or a combination of any of the foregoing, provided at least one R is aryl.

Examples include phenyl bisdodecyl phosphate, phenylbisneopentyl phosphate, phenyl-bis (3,5,5'-tri-methyl-hexyl phosphate), ethyldiphenyl phosphate, 2-ethyl-hexyldi(p-tolyl) phosphate, bis-(2-ethylhexyl) p-tolylphosphate, tritolyl phosphate, bis-(2-ethylhexyl) phenyl phosphate, tri-(nonylphenyl) phosphate, di (dodecyl) p-tolyl phosphate, tricresyl phosphate, triphenyl phosphate, dibutylphenyl phosphate, 2-chloroethyldiphenyl phosphate, p-tolyl bis(2,5,5'-trimethylhexyl) phosphate, 2-ethylhexyldiphenyl phosphate, and the like. The preferred phosphates are those in which each R is aryl. Especially preferred is triphenyl phosphate, which may be either unsubstituted or substituted, for example, isopropylated triphenyl phosphate.

Alternatively, the organic phosphate can be a di- or polyfunctional compound or polymer having the formula (X), (XI), or (XII) below: 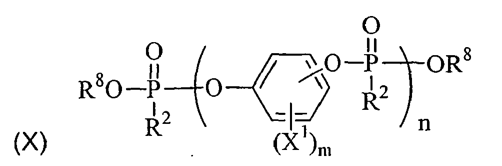 or 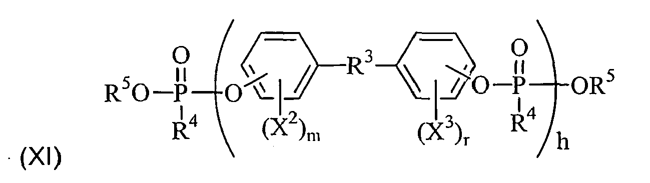 or 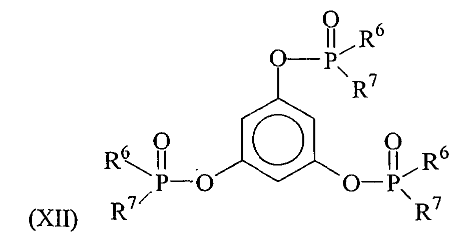 including mixtures thereof, in which R⁸, R³ and R⁵ are, independently, hydrocarbon; R², R⁴, R⁶ and R⁷ are, independently, hydrocarbon or hydrocarbonoxy; X¹, X² and X³ are halogen; m and r are 0 or integers from 1 to 4, and n and h are from 1 to 30.

Examples include the bis diphenyl phosphates of resorcinol, hydroquinone and bisphenol-A, respectively, or their polymeric counterparts.

Another development is the use of certain cyclic phosphates, for example, diphenyl pentaerythritol diphosphate, as a flame retardant agent for polyphenylene ether resins, as is described by Axelrod in U.S. Pat. No. 4,254,775.

Also suitable as flame-retardant additives for this invention are compounds containing phosphorus -nitrogen bonds, such as phosphonitrilic chloride, phosphorus ester amides, phosphoric acid amides, phosphonic acid amides, phosphinic acid amides, tris(aziridinyl) phosphine oxide, or tetrakis(hydroxymethyl) phosphonium chloride. These flame-retardant additives are commercially available.

Preferred phosphate flame retardants include those based upon resorcinol such as, for example, resorcinol tetraphenyl diphosphate, as well as those based upon bis-phenols such as, for example, bis-phenol A tetraphenyl diphosphate. Phosphates containing substituted phenyl groups are also preferred. In an especially preferred embodiment, the organophosphate is selected from the group consisting of butylated triphenyl phosphate ester, resorcinol tetraphenyl diphosphate, bis-phenol A tetraphenyl diphosphate, and mixtures containing at least one of the foregoing.

The composition may comprise flame retardant in an amount of about 2 to about 40 weight percent. Within this range, the composition may comprise greater than or equal to about 5 and preferably greater than or equal to about 8 weight percent flame retardant. Also within this range the composition may comprises less than about 30 and preferably less than or equal to about 20 weight percent flame retardant, based on the total weight of the composition.

The composition may also include effective amounts of at least one additive selected from the group consisting of anti-oxidants, drip retardants, dyes, pigments, colorants, stabilizers, small particle mineral such as clay, mica, and talc, antistatic agents, plasticizers, lubricants, and mixtures thereof. These additives are known in the art, as are their effective levels and methods of incorporation. Effective amounts of the additives vary widely, but they are usually present in an amount up to about 50% or more by weight, based on the weight of the entire composition. Especially preferred additives include hindered phenols, thio compounds and amides derived from various fatty acids. The preferred amounts of these additives generally ranges up to about 2% total combined weight based on the total weight of the composition.

The components of the composition are blended under conditions for the formation of an intimate blend. The components are typically blended in melt, preferably in an extruder, usually at a temperature greater than or equal to about 255°C. The composition can be made by either using poly(arylene ether) capped with an aromatic ester or the poly(arylene ether) may be capped while forming the composition. When blending already capped poly(arylene ether) with other component(s) the capped poly(arylene ether) and the other component(s) are blended under conditions for the formation of an intimate blend, typically in an extruder or other high shear mixing device. In some embodiments, capping agent is added to the high shear mixing device with the capped poly(arylene ether), particularly when the composition will molded to form an article. When capping the poly(arylene ether) while forming the composition the poly(arylene ether), capping agent and other component(s) are blended in melt for a time sufficient to react the capping agent with the poly(arylene ether), typically in an extruder or other high shear mixing device. In some embodiments it is preferable to add the capping agent after (downstream) adding the poly(arylene ether) to the high shear mixing device. In some embodiments excess capping agent is added, particularly when the composition will be molded to form an article.

The invention is further illustrated by the following non-limiting examples.

### EXAMPLES

The following examples were made using the materials listed in Table 1.

| Component | Description/Tradename/Supplier |
|---|---|
| PPO I | Poly(arylene ether) having an intrinsic viscosity of 0.46 dl/g measured in chloroform at 25°C |
| PPO II | Poly(arylene ether) having an intrinsic viscosity of 0.33 dl/g measured in chloroform at 25°C |
| Polysalicylate | |
| SEBS | Styrene-(ethylene-butylene)-styrene available under the tradename Kraton G 1651 from Kraton Polymers |
| XPS | Styrene homopolymer |
| Irganox 1010 | Anti-oxidant |
| HIPS | Rubber-modified polystyrene |
| Glass | Glass fiber from Owens Coming |
| LLDPE | Linear low density polyethylene |
| RDP | Resorcinol diphosphate |

### Examples 1-16.

The components were blended in a twin screw extruder in the amounts as shown in Table 2. Amounts are expressed as parts per hundred parts of total resin by weight. The resulting compositions were molded into ASTM tensile specimens and tested for tensile strength at break according to ASTM D638. Each composition was tested on unaged specimens (those kept at room temperature) and on specimens aged at the temperatures shown in Table 2 for 500 hours. Results in mega Pascal are shown in Table 2.

**Table 2**

| | 1* | 2 | 3 | 4* | 5 | 6 | 7* | 8* | 9* | 10 | 11* | 12 | 13 | 14* | 15 | 16 |
|---|---|---|---|---|---|---|---|---|---|---|---|---|---|---|---|---|
| PPO I | 100 | 100 | 100 | - | - | - | 50 | 50 | 50 | 50 | 80 | 80 | 80 | 67 | 67 | 67 |
| PPO II | - | - | - | 100 | 100 | 100 | - | - | - | - | - | - | - | - | - | - |
| HIPS | - | - | - | - | - | - | 50 | 50 | - | - | - | - | - | 23 | - | - |
| XPS | - | - | - | - | - | - | - | - | 42.5 | 42.5 | - | - | - | - | 19.5 | 19.5 |
| SEBS | - | - | - | - | - | - | - | - | 7.5 | 7.5 | - | - | - | - | 3.5 | 3.5 |
| Polysalicylate | - | 4 | 6 | - | 4 | 6 | - | 2.5 | - | 2.5 | - | 2 | 4 | - | - | 3 |
| Irganox 1010 | - | - | - | - | - | - | - | - | - | - | - | - | - | - | - | - |
| LLDPE | - | - | - | - | - | - | - | - | - | - | - | - | - | 1 | 1 | 1 |
| Glass | - | - | - | - | - | - | - | - | - | - | 20 | 20 | 20 | - | - | - |
| RDP | - | - | - | - | - | - | - | - | - | - | - | - | - | 9 | 9 | 9 |
| Tensile strength at break | - | - | - | - | - | - | - | - | - | - | - | - | - | - | - | - |
| Unaged | 84 | 84 | 82 | 79 | 80 | 81 | 52 | 50 | 55 | 56 | 120 | 115 | 110 | 64 | 70 | 77 |
| 120°C | 82 | 92 | 89 | 40 | 72 | 75 | 44 | 38 | 53 | 60 | 102 | 102 | 106 | 68 | 73 | 82 |
| 140°C | 72 | 84 | 86 | 35 | 63 | 70 | 35 | 29 | 48 | 56 | 89 | 95 | 105 | 62 | 71 | 79 |
| 175°C | 65 | 86 | 84 | - | - | - | - | - | - | - | 60 | 73 | 92 | 53 | 65 | 75 |
| 190°C | 32 | 70 | 81 | - | - | - | - | - | - | - | - | - | - | - | - | - |

| | | | | | | | | | | | | | | | | |
|---|---|---|---|---|---|---|---|---|---|---|---|---|---|---|---|---|
| * Comparative examples | | | | | | | | | | | | | | | | |

As can be seen by comparing the unaged and heat aged yield strengths of the comparative examples to the non-comparative examples, yield strength after heat aging is significantly improved when poly(arylene ether) having aromatic ester end group is employed, with the exception of compositions containing a rubber-modified poly(alkenyl aromatic) resin such as Example 8. Compositions containing a poly(arylene ether) having aromatic ester end group and a rubber-modified poly(alkenyl aromatic) resin require an antioxidant to maintain yield strength with heat aging.

While preferred embodiments have been shown and described, various modifications and substitutions may be made thereto without departing from the spirit and scope of the invention. Accordingly, it is to be understood that the present invention has been described by way of illustration and not limitation. All of the U.S. Patent cited herein are incorporated herein by reference.

## Claims

1. A thermoplastic poly(arylene ether) composition comprising greater than 15 weight % of a poly(arylene ether) having aromatic ester end groups selected from the group consisting of salicylic acid and anthranilic acid, and a component selected from the group consisting of impact modifier, alkenyl aromatic polymer, rubber-modified poly(alkenyl aromatic) resin, reinforcing filler, flame retardant, and combinations of two or more of the foregoing, with the proviso that when the component is a rubber-modified poly(alkenyl aromatic) resin, the composition further comprises an antioxidant.

2. A method of making a poly(arylene ether) composition of claim 1 comprising blending a mixture comprising poly(arylene ether) having aromatic ester end groups and a component selected from the group consisting of impact modifier, alkenyl aromatic polymers, rubber-modified poly(alkenyl aromatic) resin, reinforcing filler, flame retardant and combinations of two or more of the foregoing.

3. The method of claim 2 for making a poly(arylene ether) composition comprising melt blending a poly(arylene ether) with one or more capping agents selected from the group consisting of salicylic acid ester, anthranilic acid ester and derivatives thereof and a component selected from the group consisting of impact modifier, alkenyl aromatic polymers, rubber-modified poly(alkenyl aromatic) resin, reinforcing filler, flame retardant and combinations of two or more of the foregoing.

4. The method of Claim 3 wherein the capping agent is added downstream of the poly(arylene ether).

5. The method of Claim 2 wherein the mixture further comprises a capping agent.

6. The composition or method of any of the preceding claims wherein the impact modifier is at least partially hydrogenated.

7. The composition or method of Claims 1-5 wherein the impact modifier is an unsaturated block copolymer and the composition further comprises anti-oxidant.

8. The composition or method of Claims 1-5 wherein the component is a combination of alkenyl aromatic polymer and hydrogenated impact modifier.

9. The composition or method of any of the preceding claims, wherein the reinforcing filler is glass fiber.

10. The composition or method of Claims 1-5, wherein the component is a rubber-modified poly(alkenyl aromatic) resin and the composition further comprises an antioxidant.

## Patentansprüche

1. Thermoplastische Poly(arylenether)-Zusammensetzung, umfassend mehr als 15 Gew.-% eines Poly(arylenethers) mit aromatischen Esterendgruppen, ausgewählt aus der Gruppe, bestehend aus Salicylsäure und Anthranilsäure, und einen Bestandteil, ausgewählt aus der Gruppe, bestehend aus Schlagmodifikator, alkenylaromatischem Polymer, kautschukmodifiziertem poly(alkenylaromatischem) Harz, Verstärkungsfüllstoff, Flammschutzmittel und Kombinationen von zwei oder mehr des Vorstehenden, mit der Maßgabe, dass, wenn der Bestandteil ein kautschukmodifiziertes poly(alkenylaromatisches) Harz ist, die Zusammensetzung ferner ein Antioxidationsmittel umfasst.

2. Verfahren zur Herstellung einer Poly(arylenether)-Zusammensetzung nach Anspruch 1, umfassend das Mischen eines Gemischs, umfassend Poly(arylenether) mit aromatischen Esterendgruppen und einen Bestandteil, ausgewählt aus der Gruppe, bestehend aus Schlagmodifikator, alkenylaromatischem Polymeren, kautschukmodifiziertem poly(alkenylaromatischem) Harz, Verstärkungsfüllstoff, Flammschutzmittel und Kombinationen von zwei oder mehr des Vorstehenden.

3. Verfahren nach Anspruch 2 zur Herstellung einer Poly(arylenether)-Zusammensetung, umfassend das Schmelzmischen eines Poly(arylenethers) mit einem oder mehreren Capping-Mitteln, ausgewählt aus der Gruppe, bestehend aus Salicylsäureester und Anthranilsäureester und Derivaten davon, und eines Bestandteils, ausgewählt aus der Gruppe, bestehend aus Schlagmodifikator, alkenylaromatischem Polymer, kautschukmodifiziertem poly(alkenylaromatischem) Harz, Verstärkungsfüllstoff, Flammschutzmittel und Kombinationen von zwei oder mehr des Vorstehenden.

4. Verfahren nach Anspruch 3, wobei das Capping-Mittel stromabwärts des Poly(arylenethers) zugesetzt wird.

5. Verfahren nach Anspruch 2, wobei das Gemisch ferner ein Capping-Mittel umfasst.

6. Zusammensetzung oder Verfahren nach einem der vorangehenden Ansprüche, wobei der Schlagmodifikator zumindest teilweise hydriert ist.

7. Zusammensetzung oder Verfahren nach den Ansprüchen 1-5, wobei der Schlagmodifikator ein ungesättigtes Blockcopolymer ist und die Zusammensetzung ferner ein Antioxidationsmittel umfasst.

8. Zusammensetzung oder Verfahren nach den Ansprüchen 1-5, wobei der Bestandteil eine Kombination aus alkenylaromatischem Polymer und hydriertem Schlagmodifikator ist.

9. Zusammensetzung oder Verfahren nach einem der vorangehenden Ansprüche, wobei der Verstärkungsfüllstoff Glasfaser ist.

10. Zusammensetzung oder Verfahren nach den Ansprüchen 1-5, wobei der Bestandteil ein kautschukmodifiziertes poly(alkenylaromatisches) Harz ist und die Zusammensetzung ferner ein Antioxidationsmittel umfasst.

## Revendications

1. Composition thermoplastique de poly(arylène éther) comprenant plus de 15 % en poids d'un poly(arylène éther) ayant des groupes terminaux esters aromatiques choisis dans le groupe consistant en l'acide salicylique et l'acide anthranilique, et un composant choisi dans le groupe consistant en un modifiant choc, un polymère alcénylaromàtique, une résine de poly(composé alcénylaromatique) modifié par un caoutchouc, une charge de renfort, un retardateur de flamme, et des combinaisons d'au moins deux d'entre eux, à la condition que, quand le composant est une résine de poly(composé alcénylaromatique) modifié par un caoutchouc, la composition comprenne en outre un antioxydant.

2. Procédé de préparation d'une composition de poly(arylène éther) selon la revendication 1, qui comprend l'opération consistant à mélanger un mélange comprenant un poly(arylène éther) ayant des groupes terminaux ester aromatique et un composant choisi dans le groupe consistant en un modifiant choc, des polymères alcénylaromatiques, une résine de poly(composé alcényl-aromatique) modifié par un caoutchouc, une charge de renfort, un retardateur de flamme, et des combinaisons d'au moins deux d'entre eux.

3. Procédé selon la revendication 2, pour préparer une composition de poly(arylène éther), comprenant l'opération de mélange à l'état fondu d'un poly(arylène éther) avec un ou plusieurs agents de coiffage en bout choisis dans le groupe consistant en les esters de l'acide salicylique, les esters de l'acide anthranilique et leurs dérivés, et un composant choisi dans le groupe consistant en un modifiant choc, des polymères alcényl-aromatiques, une résine de poly(composé alcénylaromatique) modifié par un caoutchouc, une résine de renfort, un retardateur de flamme et des combinaisons d'au moins deux d'entre eux.

4. Procédé selon la revendication 3, dans lequel l'agent de coiffage en bout est ajouté en aval du poly(arylène éther).

5. Procédé selon la revendication 2, dans lequel le mélange comprend en outre un agent de coiffage en bout.

6. Composition ou procédé selon l'une quelconque des revendications précédentes, dans lequel le modifiant choc est au moins partiellement hydrogéné.

7. Composition ou procédé selon les revendications 1 à 5, où le modifiant choc est un copolymère à blocs insaturés, et la composition comprend en outre un antioxydant.

8. Composition ou procédé selon les revendications 1 à 5, où le composant est une combinaison d'un polymère alcénylaromatique et d'un modifiant choc hydrogéné.

9. Composition ou procédé selon l'une quelconque des revendications précédentes, où la charge de renfort est constituée de fibres de verre.

10. Composition ou procédé selon les revendications 1 à 5, où le composant est une résine de poly(composé alcénylaromatique) modifié par un caoutchouc, et la composition comprend en outre un antioxydant.
